# DEMANDE DE BREVET EUROPEEN

(11) **EP 0 740 355 A1**
(43) Date de publication de la demande: **30.10.1996**
(21) Numéro de dépôt: 96400850.2
(22) Date de dépôt: 22.04.1996
(51) Int. Cl.: H01M 4/24, H01M 4/62

(54) **Electrode négative d'accumulateur Ni-MH**

(30) Priorité: 24.04.1995 FR 9504871
(71) Demandeur: SAFT, F-93230 Romainville (FR)
(72) Inventeur: Coco, Isabelle, 33405 Talence Cedex (FR); Cocciantelli, Jean-Michel, 33000 Bordeaux (FR); Villenave, Jean-Jacques, 33405 Talence Cedex (FR)
(74) Mandataire: Gosse, Michel

(57) **Abrégé**

La présente invention a pour objet une électrode négative d'accumulateur Ni-MH comportant un collecteur de courant supportant une pâte contenant un alliage hydrurable et un liant, caractérisée en ce que ledit liant est un polymère portant des groupements hydrophiles et hydrophobes, ledit polymère étant choisi parmi un homopolymère, un copolymère et un terpolymère acrylique comportant exclusivement des groupes alliphatiques non-ioniques, un copolymère d'acide organique insaturé, et un copolymère d'anhydride d'acide insaturé.

## Description

La présente invention concerne une électrode négative d'accumulateur nickel-hydrure Ni-MH, et en particulier le liant servant à sa réalisation.

Une électrode négative de type plastifiée se compose d'un support servant de collecteur de courant sur lequel on enduit une pâte constituée de la matière active pulvérulente, un liant et souvent un matériau conducteur. Le liant a pour fonction d'assurer la cohésion des grains de matière active entre eux et sur le support de l'électrode avant l'assemblage de l'accumulateur et durant son fonctionnement.

La surface électrochimiquement active d'une électrode dépend de la surface mouillée par l'électrolyte. Si l'électrode est insuffisamment mouillée, la surface active est diminuée ce qui entraîne une augmentation de la densité de courant local et une plus faible capacité chargée. Pour favoriser la mouillabilité de l'électrode par l'électrolyte aqueux, le liant doit donc posséder un caractère hydrophile. Le liant a une grande influence sur les propriétés de l'électrode négative de l'accumulateur Ni-MH. Le liant doit maintenir le contact électrique entre les grains de l'alliage hydrurable. Une perte de conductivité de l'électrode MH n'est jamais récupérable, contrairement à ce qui se produit par exemple pour une électrode au cadmium ou au zinc.

Au cours du cyclage de l'accumulateur, l'alliage hydrurable absorbe et désorbe successivement l'hydrogène ce qui provoque sa division et une augmentation du volume de l'électrode. Le liant doit donc être capable d'accompagner et de limiter l'augmentation du volume de l'électrode au cours de son vieillissement.

Dans un accumulateur Ni-MH, le liant doit permettre la réabsorption de l'hydrogène par voie solide-gaz au cours de la décharge. La perméabilité au gaz du liant utilisé est un critère essentiel pour assurer le fonctionnement de l'électrode. Pour que le rendement d'absorption soit élevé, il est nécessaire de ménager l'apparition de ménisques triphasiques sur l'électrode négative. Ces ménisques ne se forment que lorsque l'électrode possède un caractère hydrophobe.

Dans les électrodes d'accumulateur alcalin connues, les liants suivants ont été utilisés:
- résines fluorées: elles possèdent un caractère hydrophobe marqué rendant difficile l'imprégnation de l'électrode et la rétention de l'électrolyte, de plus, elles n'assurent une bonne tenue mécanique à l'électrode que pour des taux supérieurs à 3%, ce qui diminue considérablement les performances en décharge rapide (T Sakaï et al., J. Less Common Met., 172-174 (1991), 1185-1193),
- dérivés cellulosiques: ils ont de bonnes propriétés épaississantes et adhésives mais ne permettent pas de conserver la cohésion intergranulaire après une opération de laminage et pendant le fonctionnement dans l'électrolyte (dégradation des propriétés adhésives),
- poly(vinylpyrrolidone): elle permet d'obtenir de bons rendements électrochimiques mais conduit à une électrode rigide et fragile, empêchant toute opération de calibrage par laminage,
- élastomères thermoplastiques: ils présentent une bonne capacité électrochimique mais leur tenue mécanique est insuffisante (T. Hara et al., J. Electrochem. Soc., 140,9 (1993), 2450-2454).

En outre de nombreux polymères sont connus pour leur faible perméabilité à l'hydrogène comme les polymères vinyliques, par exemple elle est de:
- polyacétate de vinyle: 6,84.10⁻¹³cm².s.Pa à 30°C,
- polychlorure de vinyle: 1,3.10⁻¹³cm².s.Pa à 25°C,

La présente invention a pour but de proposer une électrode négative d'accumulateur Ni-MH qui conserve un rendement d'absorption/désorption élevé pendant toute sa durée de vie.

La présente invention a également pour but de proposer une électrode dont le liant possède une excellente perméabilité à l'hydrogène et assure le tenue mécanique de l'électrode.

L'objet de la présente invention est une électrode négative d'accumulateur Ni-MH comportant un collecteur de courant supportant une pâte contenant un alliage hydrurable et un liant, caractérisée en ce que ledit liant est un polymère portant des groupements hydrophiles et hydrophobes, ledit polymère étant choisi parmi un homopolymère, un copolymère et un terpolymère acrylique comportant exclusivement des groupes alliphatiques non-ioniques, un copolymère d'acide organique insaturé et un copolymère d'anhydride d'acide insaturé.

Par l'utilisation d'un polymère associant les deux caractères hydrophobe et hydrophile comme liant d'électrode négative MH, l'invention permet d'obtenir une électrode de bonne cohésion qui est facilement mouillable par l'électrolyte et qui permet l'absorption/désorption de l'hydrogène. De préférence la masse molaire moyenne en nombre du polymère est comprise entre 1 000 et 1 000 000.

Les polymères acryliques selon l'invention ne doivent pas comporter de groupes aromatiques comme par exemple un groupe styrène.

Les polymères acryliques selon l'invention ne doivent pas porter de groupes ioniques car ils perdraient alors leurs propriétés adhésives. Les polymères acryliques porteur de groupes ioniques sont habituellement utilisés comme épaississants.

Les polymères acryliques ont généralement une faible perméabilité à l'hydrogène. De manière surprenante, on a observé que les homopolymères, copolymères et terpolymères acryliques selon la présente invention n'entravaient pas la réaction de réabsorption de l'hydrogène par l'alliage hydrurable.

L'accessibilité de l'hydrogène est donc totalement préservée par ce liant.

Selon un mode de réalisation préférentiel, on utilisera un polymère choisi parmi un homopolymère (I), un copolymère (II) et un terpolymère (III) d'acrylate ou de métacrylate.

Selon une première forme d'exécution, le polymère est un homopolymère (I) d'acrylate ou de métacrylate, de motif unitaire: 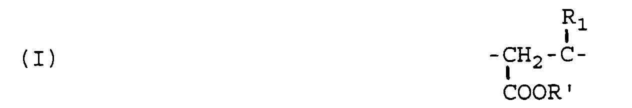 dans lequel:
- R₁ est choisi parmi l'hydrogène H et un groupe méthyle CH₃, et
- R' est un groupe alkyle non fonctionnel choisi parmi un groupe méthyle CH₃, éthyle CH₂-CH₃, butyle (CH₂)₃-CH₃ et 2-éthylhexyle CH₂-CH(C₂H₅)-(CH₂)₃-CH₃, ou un groupe alkyle fonctionnel choisi parmi un groupe hydroxyéthyle CH₂-CH₂OH et aminoalkyle.

Le fait que le polymère acryliques ne porte pas de groupe ionique se traduit par le fait que R' ne doit pas être l'hydrogène H ou un cation formant un sel comme par exemple K⁺, Na⁺, etc...

Selon une deuxième forme d'exécution, le polymère est un copolymère (II) d'acrylate ou de métacrylate, de motif unitaire: 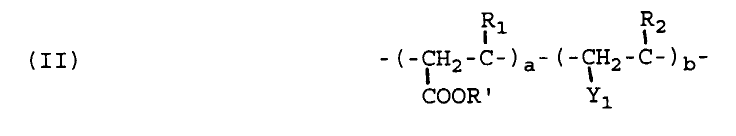 dans lequel:
- R₁ et R₂ sont indépendamment choisis parmi l'hydrogène et un groupe méthyle,
- R' est un groupe alkyle non fonctionnel choisi parmi un groupe méthyle, éthyle, butyle et 2-éthylhexyle, ou un groupe alkyle fonctionnel choisi parmi un groupe hydroxyéthyle et aminoalkyle,
- Y₁ est choisi parmi l'hydrogène, un groupe halogéné, un groupe alcoxyle O-CH₃, un groupe acétate O-CO-CH₃, un groupe ester, un groupe alkyle non fonctionnel choisi parmi un groupe méthyle, éthyle, butyle et 2-éthylhexyle, et un groupe alkyle fonctionnel choisi parmi un groupe hydroxyéthyle et aminoalkyle, et
- le rapport a/b est compris entre 0,1 et 0,9.

Dans le cas où Y₁ est un groupe ester, il est de préférence de la forme COOR" où R" est l'hydrogène, un groupe alkyle non fonctionnel choisi parmi un groupe méthyle, éthyle, butyle et 2-éthylhexyle, ou un groupe alkyle fonctionnel choisi parmi un groupe hydroxyéthyle et aminoalkyle.

Selon une troisième forme d'exécution, le polymère est un terpolymère (III) d'acrylate ou de métacrylate, de motif unitaire: 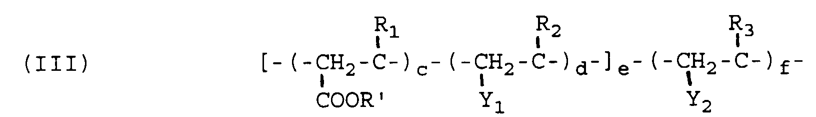 dans lequel:
- R₁, R₂, et R₃ sont indépendamment choisis parmi l'hydrogène et un groupe méthyle,
- R' est un groupe alkyle non fonctionnel choisi parmi un groupe méthyle, éthyle, butyle et 2-éthylhexyle, ou un groupe alkyle fonctionnel choisi parmi un groupe hydroxyéthyle et aminoalkyle,
- Y₁ et Y₂ sont indépendamment choisis parmi l'hydrogène, un groupe halogéné, un groupe alcoxyle, un groupe acétate, un groupe ester, un groupe alkyle non fonctionnel choisi parmi un groupe méthyle, éthyle, butyle et 2-éthylhexyle, et un groupe alkyle fonctionnel choisi parmi un groupe hydroxyéthyle et aminoalkyle,
- le rapport c/d est compris entre 0,1 et 0,9, et
- le rapport e/f est compris entre 0,1 et 0,9.

Dans le cas où Y₁ et/ou Y₂ sont indépendamment un groupe ester, il est de préférence de la forme COOR" où R" est l'hydrogène, un groupe alkyle non fonctionnel choisi parmi un groupe méthyle, éthyle, butyle et 2-éthylhexyle, ou un groupe alkyle fonctionnel choisi parmi un groupe hydroxyéthyle et aminoalkyle.

Selon un autre mode de réalisation, le liant est un copolymère d'un acide organique insaturé (IV) de motif unitaire: 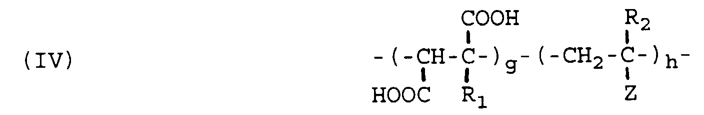 dans lequel:
- R₁ et R₂ sont indépendamment choisis parmi l'hydrogène et un groupe méthyle,
- Z est choisi parmi l'hydrogène, un groupe halogéné, un groupe alcoxyle, un groupe ester, un groupe acétate, un groupe alkyle non fonctionnel choisi parmi un groupe méthyle, éthyle, butyle et 2-éthylhexyle, un groupe alkyle fonctionnel choisi parmi un groupe hydroxyéthyle et aminoalkyle, et un radical monovalent issu d'un noyau benzénique éventuellement substitué en para par un groupe choisi parmi un groupe halogéné, alcoxyle, acétate et ester, un groupe alkyle non fonctionnel choisi parmi un groupe méthyle, éthyle, butyle et 2-éthylhexyle, et un groupe alkyle fonctionnel choisi parmi un groupe hydroxyéthyle et aminoalkyle, et
- le rapport g/h est compris entre 0,1 et 0,9.

Dans le cas où Z est choisi parmi un groupe ester et un noyau benzénique substitué en para par un groupe ester, ledit groupe ester est de préférence de la forme COOR" où R" est l'hydrogène, un groupe alkyle non fonctionnel choisi parmi un groupe méthyle, éthyle, butyle et 2-éthylhexyle, ou un groupe alkyle fonctionnel choisi parmi un groupe hydroxyéthyle et aminoalkyle.

De préférence, l'acide organique est choisi parmi l'acide fumarique (V), l'acide mésaconique (VI) et l'acide itaconique (VII):

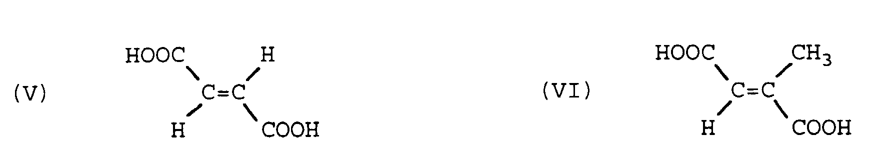

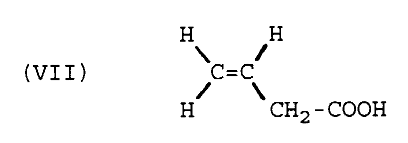

Selon encore un autre mode de réalisation, le liant est un copolymère d'un anhydride d'acide insaturé (VIII) de motif unitaire: 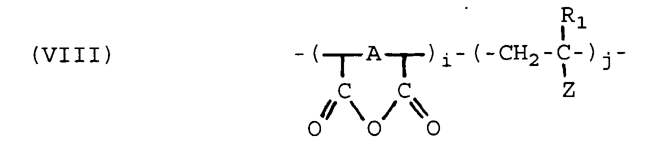 dans lequel:
- R₁ est choisi parmi l'hydrogène et un groupe méthyle,
- A est un radical quadrivalent choisi parmi un groupe alkylidène et un groupe cycloalkylène,
- Z est choisi parmi l'hydrogène, un groupe halogéné, un groupe alcoxyle, un groupe ester, un groupe acétate, un groupe alkyle non fonctionnel choisi parmi un groupe méthyle, éthyle, butyle et 2-éthylhexyle, un groupe alkyle fonctionnel choisi parmi un groupe hydroxyéthyle et aminoalkyle, et un radical monovalent issu d'un noyau benzénique éventuellement substitué en para par un groupe choisi parmi un groupe halogéné, alcoxyle, acétate et ester, un groupe alkyle non fonctionnel choisi parmi un groupe méthyle, éthyle, butyle et 2-éthylhexyle, et un groupe alkyle fonctionnel choisi parmi un groupe hydroxyéthyle et aminoalkyle, et
- le rapport i/j est compris entre 0,1 et 0,9.

Dans le cas où Z est choisi parmi un groupe ester et un noyau benzénique substitué en para par un groupe ester, ledit groupe ester est de préférence de la forme COOR" où R" est l'hydrogène, un groupe alkyle non fonctionnel choisi parmi un groupe méthyle, éthyle, butyle et 2-éthylhexyle, ou un groupe alkyle fonctionnel choisi parmi un groupe hydroxyéthyle et aminoalkyle.

De préférence, l'anhydride d'acide est choisi parmi l'anhydride maléïque (IX) et l'anhydride tétrahydrophtalique (X):

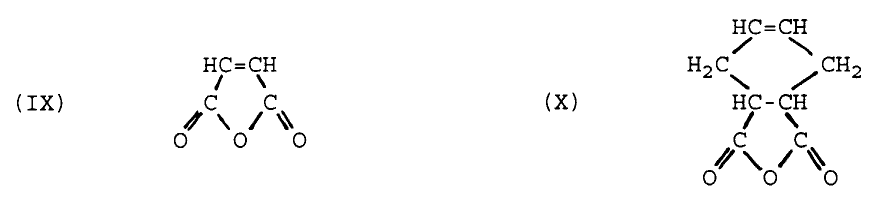

Avantageusement, ledit copolymère d'anhydride d'acide insaturé est estérifié, saponifié et/ou neutralisé partiellement de manière à moduler ses propriétés de mouillabilité. Le procédé d'esterification permet par exemple de greffer des radicaux dont la quantité et la nature modulent de manière notable les propriétés du liant et de l'électrode. Sans que cette interprétation ne viennent limiter la présente invention, l'hydrophobicité du liant peut être diminuée par le choix de radicaux parmi les groupes alkyles non fonctionnels de faible masse molaire C'est ainsi, par exemple que le caractère hydrophile des polyacrylates augmente quand leur groupe alcoxyle a une masse molaire faible. En maîtrisant les propriétés du liant, l'hydrophilie des électrodes peut donc être contrôlée.

La présente invention a également pour objet un procédé de fabrication d'une électrode négative d'accumulateur Ni-MH comportant un collecteur de courant supportant une pâte contenant un alliage hydrurable et un liant. On réalise ladite pâte en ajoutant ledit liant sous forme dispersée à l'alliage en suspension dans un milieu liquide de la manière suivante.

L'alliage hydrurable sous forme pulvérulente est mis en suspension dans un liquide aqueux sous agitation. Des agents épaississants connus, comme des agents polyéther, cellulosiques ou dérivés d'acide carboxylique, peuvent être ajoutés à la suspension. Dans la suspension, le liant est alors introduit sous forme d'une poudre, ou de préférence sous la forme d'une émulsion aqueuse ou d'une dispersion aqueuse permettant de répartir le liant de manière homogène dans la pâte. L'utilisation de solvant organique doit être proscrite. Il est possible que des traces résiduelles de solvant subsistent dans l'électrode, ce qui a des conséquences néfastes sur le fonctionnement de l'accumulateur.

La pâte est déposée sur un support jouant le rôle de collecteur de courant, par exemple un support métallique tridimensionnel, de type déployé, ou bidimensionnel, comme un feuillard.

Le liant utilisé dans la présente invention a comme avantages:
- commodité de fabrication des électrodes: les polyacrylates selon l'invention étant accessibles en émulsion aqueuse ou émulsifiable, la fabrication des électrodes par empâtage par voie humide suivi de séchage est facilitée (pâte stable avec de bonnes propriétés rhéologiques);
- stabilité dimensionnelle des électrodes: il suffit d'une faible masse de liant (au plus égale à 0,5%) pour assurer la cohésion des électrodes en leur conservant une excellente souplesse;
- amélioration des performances de l'accumulateur en décharge rapide par l'utilisation de liants favorisant la perméabilité aux ions hydroxyls;
- diminution de la pression de l'accumulateur étanche par l'augmentation du rendement de recombinaison de l'oxygène: il devient possible d'augmenter la quantité d'électrolyte et ainsi d'accroître la durée de vie des accumulateur étanches.

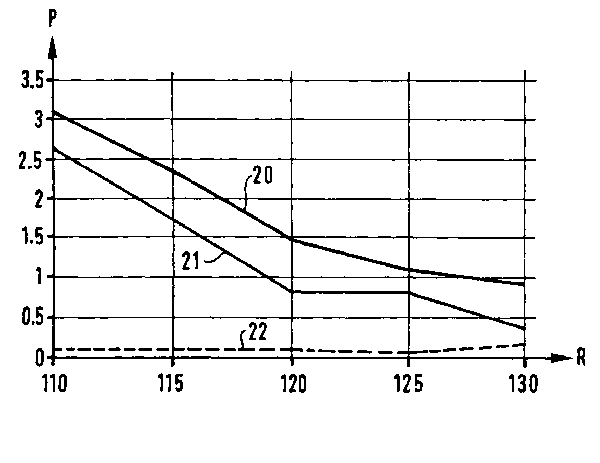

L'invention sera mieux comprise et d'autres avantages et particularités apparaîtront à la lecture des exemples suivants de modes de réalisation, donnés bien entendu à titre illustratif mais nullement limitatif, et dans le dessin annexé où la figure unique représente la relation entre le taux de remplissage en électrolyte et d'une part la pression totale et d'autre part la pression en hydrogène à l'intérieur d'un accumulateur comportant une électrode négative contenant un liant selon la présente invention.

Sur la figure, la pression P en bars est donné en ordonnée et en abscisse le taux de remplissage R en %, en excès par rapport au taux de remplissage usuel (100%).

### EXEMPLE 1

On réalise une électrode négative A pour accumulateur Ni-MH selon l'art antérieur de la manière suivante. La pâte se compose de 99,4% en poids de matière active, de 0,3% en poids d'un liant cellulosique qui est l'hydroxypropylméthylcellulose (HPMC), et de 0,3% de carbone comme conducteur.

La matière active est un alliage hydrurable sous forme pulvérulente de formule AB₅ de type "Mischmetal" substitué par Mn, Al et Co.

La poudre de matière active est mise en suspension par agitation dans l'eau. On ajoute progressivement le liant en poudre dans la suspension sous agitation. La pâte ainsi obtenue est déposée sur un support déployé de nickel. L'électrode est séchée puis laminée.

L'électrode obtenue est rigide et présente une mauvaise tenue mécanique lors de la manipulation (toucher, frottement, laminage, découpe, pliage, etc...) qui se traduit par une cassure ou la perte de matière active.

### EXEMPLE 2

On réalise une électrode négative B pour accumulateur Ni-MH selon l'art antérieur analogue à celle de l'exemple 1, à l'exception du liant qui est l'alcool polyvinylique (PVA).

L'électrode est fabriquée de manière analogue à l'exemple 1 à l'exception du fait que le liant est ajouté sous forme d'une émulsion aqueuse à la suspension d'alliage hydrurable sous agitation.

L'électrode est rigide et présente une mauvaise tenue mécanique lors de la manipulation analogue à celle observée pour l'électrode de l'exemple 1.

### EXEMPLE 3

On réalise une électrode négative C pour accumulateur Ni-MH selon l'art antérieur de la manière décrite dans l'exemple 2, à l'exception du liant qui est la poly(vinylpyrrolidone) (PVP) .

L'électrode est rigide et présente une mauvaise tenue mécanique lors de la manipulation qui se manifeste par une perte de la cohésion intergranulaire et de l'adhérence au support.

### EXEMPLE 4

On réalise une électrode négative D pour accumulateur Ni-MH selon la présente invention de la manière suivante. La pâte se compose de 98,9% en poids d'alliage hydrurable, de 0,5% en poids de liant, de 0,3% de carbone comme conducteur et de 0,3% en poids d'un agent épaississant de type cellulosique.

L'alliage hydrurable est analogue à celui de l'exemple 1.

Le liant est un homopolymère polyacrylate (I) dans lequel R' est un groupe éthyle.

La poudre de matière active et le carbone sont mis en suspension par agitation dans un l'eau contenant l'agent épaississant. On ajoute le liant en émulsion aqueuse dans la suspension sous agitation. La pâte ainsi obtenue est déposée sur un support déployé de nickel. L'électrode est séchée puis laminée.

L'électrode est souple et présente une bonne tenue mécanique lors de la manipulation.

### EXEMPLE 5

On réalise une électrode négative E pour accumulateur Ni-MH selon la présente invention analogue à celle décrite dans l'exemple 4 à l'exception du fait que le liant est un homopolymère polyacrylate (I) dans lequel R' est un groupe 2-éthylhexyle.

### EXEMPLE 6

On réalise une évaluation des électrodes A à E précédemment fabriquées dans un accumulateur Ni-MH de type ouvert.

L'électrode positive est à base d'hydroxyde de nickel dans un support en mousse de nickel. L'hydroxyde de nickel contient comme dopant moins de 15% d'hydroxyde de Co et Zn. Les électrodes sont séparées par le séparateur imprégné d'électrolyte qui est de la potasse KOH 8,7N. Le séparateur est un copolymère polyoléfinique non tissé.

Les électrodes négatives A à E précédemment obtenues sont chacune placée dans l'accumulateur face à l'électrode de nickel dont elle est séparée par le séparateur; l'ensemble est imprégné par l'électrolyte. La conception de l'accumulateur lui confère un excédent de capacité de l'électrode positive pour pouvoir tester uniquement l'électrode négative dont la capacité limite celle de l'accumulateur. L'accumulateur est soumis à un cyclage dans les conditions suivantes:
- charge à C (C étant la capacité théorique de l'accumulateur) pendant 52 minutes,
- décharge à C pendant 48 minutes,
à l'exception des dix premiers cycles et du cycle 700 (mesure de la capacité) qui sont réalisés ainsi:
- charge à C/5 pendant 7,5 heures, heures,
- décharge à C/5 jusqu'à une tension d'arrêt de 1V,

Les rendements sont mesurés lors d'une décharge à C/5 une première fois au quatrième cycle et une deuxième fois au cycle 700. Les rendements sont exprimés en mAh/g rapportés à la matière active. Ils sont rassemblés dans le tableau I ci-dessous.

**TABLEAU I**

| Electrode | cycle 4 | cycle 700 |
|---|---|---|
| | | |
| A | 280 | - |
| B | 260 | - |
| C | 260 | 230 |
| D | 290 | 280 |
| E | 290 | 280 |

Les performances des électrodes selon la présente invention sont supérieures à celles des électrodes de l'art antérieur et leur vieillissement est moindre.

### EXEMPLE 7

Les électrodes D et E précédemment obtenues sont chacune placées dans un accumulateur étanche comportant les mêmes composants (électrode positive, séparateur, électrolyte) que celui décrit dans l'exemple 6. L'accumulateur est soumis à un cyclage dans des conditions semblables à celles employées dans l'exemple 6.

Les pressions de fonctionnement en oxygène et en hydrogène ont été observées après 7 heures de charge à C/5. Les résultats en bars sont rassemblées dans le tableau II ci-dessous.

**TABLEAU II**

| Electrode | H₂ | O₂ |
|---|---|---|
| | | |
| D | 6,0 | 3,3 |
| E | 4,0 | 1,0 |

Lors de l'utilisation comme liant d'électrode d'un homopolymère polyacrylate dans lequel R' est un groupe 2-éthylhexyle, la pression d'oxygène est trois fois plus faible qu'avec un liant du même type dans lequel R' est un groupe éthyle et la pression d'hydrogène est deux fois plus faible. La pression de fonctionnement des accumulateurs lors de la charge et de la surcharge peut ainsi être modifiée et régulée en jouant sur la nature du groupe alcoxyle des polyacrylates.

### EXEMPLE 9

L'électrode E précédemment obtenue est placée dans un accumulateur étanche analogue à celui décrit dans l'exemple 7, mais il est muni d'un dispositif de recombinaison de l'oxygène permettant de maintenir la pression d'oxygène à une valeur insignifiante (courbe 22).

Dans le cas d'un liant selon l'invention, la figure unique montre la relation entre le taux de remplissage et d'une part la pression totale (courbe 20) et d'autre part la pression en hydrogène (courbe 21).

La quantité d'électrolyte introduite dans l'accumulateur peut être alors augmentée par rapport à l'art antérieur (100%) sans augmentation excessive de la pression de fonctionnement et la durée de vie de l'accumulateur est ainsi prolongée. En effet l'une des causes de limitation de la durée de vie de l'accumulateur est la consommation d'électrolyte. La durée de vie est donc directement corrélée à la quantité d'électrolyte qu'il est possible d'introduire dans l'accumulateur. L'intérêt de l'électrode selon la présente invention se trouve donc clairement démontré.

### EXEMPLE 10

On réalise deux électrodes négatives F et G pour accumulateur Ni-MH selon la présente invention de la manière suivante. La pâte se compose de 98,9% en poids de matière active, de 0,5% en poids de liant, de 0,3% d'une poudre conductrice et de 0,3% en poids d'un agent épaississant de type cellulosique.

La matière active est un alliage hydrurable analogue à celui de l'exemple 1.

Le liant est un copolymère d'acide insaturé, respectivement un copolymère styrène/anhydride maléïque pour l'électrode F et un copolymère éther de vinyle/anhydride maléïque pour l'électrode G.

La poudre de matière active et le carbone sont mis en suspension par agitation dans un l'eau contenant l'agent épaississant. On ajoute le liant en poudre dans la suspension sous agitation. La pâte ainsi obtenue est déposée sur un support déployé de nickel. L'électrode est séchée puis laminée.

L'électrode est souple et présente une bonne tenue mécanique lors de la manipulation.

On réalise une évaluation des électrodes F, G et C précédemment fabriquées dans un accumulateur Ni-MH de type ouvert comme décrit dans l'exemple 6.

Le test électrochimique est effectué dans les conditions énoncées dans l'exemple 6 à l'exception du fait que les rendements sont mesurés lors d'une décharge à C/5 une première fois au neuvième cycle et une deuxième fois au cycle 600. Les rendements sont exprimés en mAh/g rapportés à la matière active et rassemblés dans le tableau III ci-dessous.

| Electrode | cycle 9 | cycle 600 |
|---|---|---|
| | | |
| F | 291 | 275 |
| G | 290 | 276 |
| C | 260 | 230 |

Les électrodes F et G selon l'invention ont des performances supérieures à celles de l'électrode C et leur vieillissement est moindre (5%) que celui de l'électrode de l'art antérieur (11%).

Bien entendu la présente invention n'est pas limitée aux modes de réalisation décrits, mais elle est susceptible de nombreuses variantes accessibles à l'homme de l'art sans que l'on ne s'écarte de l'esprit de l'invention. En particulier l'invention s'applique à tout type de générateur électrochimique à électrolyte liquide alcalin et électrode à hydrure métallique. La matière active d'électrode négative est par exemple un alliage hydrurable de type ABα avec 1≤α≤ 2,5 ou AB₅. L'électrode positive est généralement à base d'hydroxyde de nickel inséré dans un support conducteur poreux tridimensionnel de type fritté, feutre ou mousse. L'hydroxyde de nickel habituellement employé peut contenir comme dopant un hydroxyde d'un autre métal dans une proportion inférieure à 10% comme Co, Cd, Zn, Ca, Mg, et/ou Mn, et ses grains peuvent être de forme sphérique ou irrégulière. Les électrodes sont séparées par un séparateur imprégné d'électrolyte liquide alcalin. Les séparateurs les plus courants sont tissés ou non tissés, ou encore membranaires microporeux à base de polymère.

## Revendications

1. Electrode négative d'accumulateur Ni-MH comportant un collecteur de courant supportant une pâte contenant un alliage hydrurable et un liant, caractérisée en ce que ledit liant est un polymère portant des groupements hydrophiles et hydrophobes, ledit polymère étant choisi parmi un homopolymère, un copolymère et un terpolymère acrylique comportant exclusivement des groupes alliphatiques non-ioniques, un copolymère d'acide organique insaturé, et un copolymère d'anhydride d'acide insaturé.

2. Electrode selon la revendication 1, dans laquelle ledit polymère est choisi parmi un homopolymère d'acrylate ou de métacrylate de motif unitaire: 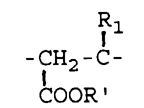 dans lequel:
- R₁ est choisi parmi l'hydrogène et un groupe méthyle,
- R' est un groupe alkyle non fonctionnel choisi parmi un groupe méthyle, éthyle, butyle et 2-éthylhexyle, ou un groupe alkyle fonctionnel choisi parmi un groupe hydroxyéthyle et aminoalkyle.

3. Electrode selon la revendication 1, dans laquelle ledit polymère est choisi parmi un copolymère d'acrylate ou de métacrylate de motif unitaire: 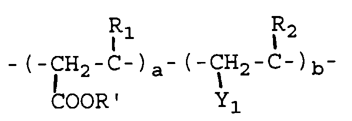 dans lequel:
- R₁ et R₂ sont indépendamment choisis parmi l'hydrogène et un groupe méthyle,
- R' est un groupe alkyle non fonctionnel choisi parmi un groupe méthyle, éthyle, butyle et 2-éthylhexyle, ou un groupe alkyle fonctionnel choisi parmi un groupe hydroxyéthyle et aminoalkyle,
- Y₁ est choisi parmi l'hydrogène, un groupe halogéné, un groupe alcoxyle, un groupe acétate, un groupe ester, un groupe alkyle non fonctionnel choisi parmi un groupe méthyle, éthyle, butyle et 2-éthylhexyle, et un groupe alkyle fonctionnel choisi parmi un groupe hydroxyéthyle et aminoalkyle, et
- le rapport a/b est compris entre 0,1 et 0,9.

4. Electrode selon la revendication 3, dans laquelle Y₁ est un groupe ester de la forme COOR" où R" est l'hydrogène, un groupe alkyle non fonctionnel choisi parmi un groupe méthyle, éthyle, butyle et 2-éthylhexyle, ou un groupe alkyle fonctionnel choisi parmi un groupe hydroxyéthyle et aminoalkyle.

5. Electrode selon la revendication 1, dans laquelle ledit polymère est choisi parmi un terpolymère d'acrylate ou de métacrylate de motif unitaire: 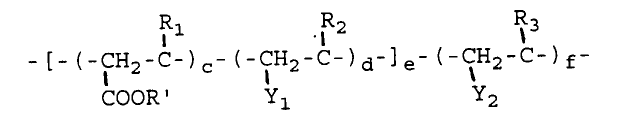 dans lequel:
- R₁, R₂, et R₃ sont indépendamment choisis parmi l'hydrogène et un groupe méthyle,
- R' est un groupe alkyle non fonctionnel choisi parmi un groupe méthyle, éthyle, butyle et 2-éthylhexyle, ou un groupe alkyle fonctionnel choisi parmi un groupe hydroxyéthyle et aminoalkyle,
- Y₁ et Y₂ sont indépendamment choisis parmi l'hydrogène, un groupe halogéné, un groupe alcoxyle, un groupe acétate, un groupe ester, un groupe alkyle non fonctionnel choisi parmi un groupe méthyle, éthyle, butyle et 2-éthylhexyle, et un groupe alkyle fonctionnel choisi parmi un groupe hydroxyéthyle et aminoalkyle,
- le rapport c/d est compris entre 0,1 et 0,9, et
- le rapport e/f est compris entre 0,1 et 0,9.

6. Electrode selon la revendication 5, dans laquelle Y₁ et/ou Y₂ sont indépendamment un groupe ester de la forme COOR" où R" est l'hydrogène, un groupe alkyle non fonctionnel choisi parmi un groupe méthyle, éthyle, butyle et 2-éthylhexyle, ou un groupe alkyle fonctionnel choisi parmi un groupe hydroxyéthyle et aminoalkyle.

7. Electrode selon la revendication 1, dans laquelle ledit polymère est choisi parmi un copolymère d'acide organique insaturé de motif unitaire: 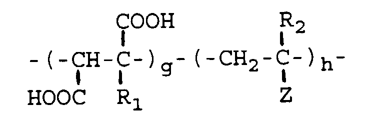 dans lequel:
- R₁ et R₂ sont indépendamment choisis parmi l'hydrogène et un groupe méthyle,
- Z est choisi parmi l'hydrogène, un groupe halogéné, un groupe alcoxyle, un groupe ester, un groupe acétate, un groupe alkyle non fonctionnel choisi parmi un groupe méthyle, éthyle, butyle et 2-éthylhexyle, un groupe alkyle fonctionnel choisi parmi un groupe hydroxyéthyle et aminoalkyle, et un radical monovalent issu d'un noyau benzénique éventuellement substitué en para par un groupe choisi parmi un groupe halogéné, alcoxyle, acétate et ester, un groupe alkyle non fonctionnel choisi parmi un groupe méthyle, éthyle, butyle et 2-éthylhexyle, et un groupe alkyle fonctionnel choisi parmi un groupe hydroxyéthyle et aminoalkyle, et
- le rapport g/h est compris entre 0,1 et 0,9.

8. Electrode selon la revendication 7, dans laquelle Z est choisi parmi un groupe ester et un noyau benzénique substitué en para par un groupe ester, ledit groupe ester étant de la forme COOR" où R" est l'hydrogène, un groupe alkyle non fonctionnel choisi parmi un groupe méthyle, éthyle, butyle et 2-éthylhexyle, ou un groupe alkyle fonctionnel choisi parmi un groupe hydroxyéthyle et aminoalkyle.

9. Electrode selon la revendication 7, dans laquelle ledit acide organique est choisi parmi l'acide fumarique, l'acide mésaconique et l'acide itaconique.

10. Electrode selon la revendication 1, dans laquelle ledit polymère est choisi parmi un copolymère d'anhydride d'acide insaturé de motif unitaire: 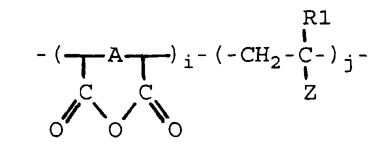 dans lequel:
- R₁ est choisi parmi l'hydrogène et un groupe méthyle,
- A est un radical quadrivalent choisi parmi un groupe alkylidène et un groupe cycloalkylène,
- Z est choisi parmi l'hydrogène, un groupe halogéné, un groupe alcoxyle, un groupe ester, un groupe acétate, un groupe alkyle non fonctionnel choisi parmi un groupe méthyle, éthyle, butyle et 2-éthylhexyle, un groupe alkyle fonctionnel choisi parmi un groupe hydroxyéthyle et aminoalkyle, et un radical monovalent issu d'un noyau benzénique éventuellement substitué en para par un groupe choisi parmi un groupe halogéné, alcoxyle, acétate et ester, un groupe alkyle non fonctionnel choisi parmi un groupe méthyle, éthyle, butyle et 2-éthylhexyle, et un groupe alkyle fonctionnel choisi parmi un groupe hydroxyéthyle et aminoalkyle, et
- le rapport i/j est compris entre 0,1 et 0,9.

11. Electrode selon la revendication 10, dans laquelle Z est choisi parmi un groupe ester de la forme COOR" et un noyau benzénique substitué en para par un groupe ester de la forme COOR", où R" est l'hydrogène, un groupe alkyle non fonctionnel choisi parmi un groupe méthyle, éthyle, butyle et 2-éthylhexyle, ou un groupe alkyle fonctionnel choisi parmi un groupe hydroxyéthyle et aminoalkyle.

12. Electrode selon la revendication 10, dans laquelle ledit anhydride d'acide est choisi parmi l'anhydride maléïque et l'anhydride tétrahydrophtalique.

13. Electrode selon l'une des revendications 10 à 12, dans laquelle ledit copolymère d'anhydride d'acide insaturé est estérifié, saponifié et/ou neutralisé partiellement.
